# EUROPÄISCHE PATENTSCHRIFT

(11) **EP 3 655 628 B1**
(45) Veröffentlichungstag und Bekanntmachung des Hinweises auf die Patenterteilung: **07.06.2023**
(21) Anmeldenummer: 18752683.5
(22) Anmeldetag: 16.07.2018
(51) Int. Cl.: E21D 11/38, E21D 11/08, F16L 21/02, F16L 49/02, F16L 21/03, F16L 21/035

(54) **DICHTUNGSPROFIL ZUR EINBETTUNG IN EIN FORMTEIL AUS AUSHÄRTBAREM MATERIAL**
SEALING PROFILE FOR EMBEDDING INTO A MOULDING OF CURABLE MATERIAL
PROFILÉ D'ÉTANCHÉITÉ À INTÉGRER DANS UNE PIÈCE MOULÉE EN MATÉRIAU DURCISSABLE

(30) Priorität: 18.07.2017 DE 102017116093
(43) Veröffentlichungstag der Anmeldung: 27.05.2020
(73) Patentinhaber: SEALABLE Solutions GmbH, 99880 Waltershausen (DE)
(72) Erfinder: KLUG, Matthias, 99817 Eisenach (DE); STENDER, Matthias, 99867 Gotha (DE)
(74) Vertreter: Stüven, Ralf
(86) Internationale Anmeldenummer: PCT/DE2018/200067
(87) Internationale Veröffentlichungsnummer: WO 2019/015730

(56) Entgegenhaltungen:
- EP-A2- 0 896 173
- EP-A2- 0 896 175
- WO-A1-2017/215715
- DE-U1- 20 121 210

## Beschreibung

Die Erfindung betrifft ein Dichtungsprofil zur Einbettung in ein Formteil aus aushärtbarem Material, insbesondere ein Beton- oder Kunststoffformteil, und eine ein solches Dichtungsprofil umfassende Dichtanordnung.

Schacht- und Tunnelbauten sind regelmäßig aus einzelnen monolithischen Fertigbauteilen (Tübbingen) zusammengesetzt, zwischen denen Kontaktfugen vorhanden sind, die mit geeigneten Dichtungen abgedichtet werden, um beispielsweise ein Eindringen von umgebendem Medium (z.B. Wasser) zu verhindern. Die Herstellung solcher Tübbinge erfolgt in der Regel mit Hilfe von Schalungsformen, wie sie beispielsweise aus DE 4218710 C1, DE 10 2007 032 236 A1 oder DE 19841047 C1 bekannt sind. Dabei wird ein aushärtbares Material, z.B. Beton, in die Schalungsform gegossen, die nach dem Aushärten des Materials geöffnet und entfernt wird. Dichtungen zur Abdichtung der Kontaktfugen können nach dem Aushärten eines Formteils in dafür vorgesehenen umlaufenden Nuten in den Stoßseiten der Fertigbauteile angeordnet werden. Ein Beispiel für eine solche Dichtung ist in DE 2833345 A1 beschrieben. Häufig werden die Dichtungen, die zur Abdichtung der Fugen erforderlich sind, die später beim Zusammensetzen der Fertigbauteile zu einem Schacht oder Tunnel entstehen, jedoch bereits beim Gießen in die Fertigbauteile integriert, indem sie mit eingegossen und verankert werden.

Zur Einbettung in Fertigbauteile vorgesehene Dichtungen sind in der Regel mit so genannten Verankerungsfüßen versehen, die beim Gießen eines Fertigbauteils von dem aushärtbaren Material umschlossen werden und dazu dienen sollen, die Dichtung zuverlässig im ausgehärteten Fertigbauteil zu halten. Es kommt jedoch trotzdem beim Einbau der Fertigbauteile, z.B. Tübbinge, immer wieder zu Verschiebungen der Dichtung in dem Fertigbauteil. Insbesondere bei rahmenartig ausgestalteten Dichtungen, wie sie häufig im Tunnelbau bei Tunneltübbingen eingesetzt werden, kann es dadurch beispielsweise zur Deformation der Dichtung im Bereich der Rahmenecken kommen.

Aus der EP 0896173 A2 und der EP 0896175 A2 sind Dichtungsvorrichtungen für Endbereiche von Betonrohren bekannt, mit einem Dichtungsring, auf dessen in den Beton eingebettete Oberfläche eine Faserbeflockung aus Textilfasern geklebt ist, um den Dichtungsring in der Rohrmuffe besser in seiner Position zu halten, wenn die Rohrenden zusammengesteckt werden.

Aufgabe der vorliegenden Erfindung ist es, ein Dichtungsprofil zur Einbettung in ein Formteil aus aushärtbarem Material bereitzustellen, das die Nachteile bekannter Dichtungsprofile nicht aufweist, insbesondere so in dem Formteil verankert werden kann, dass es beim Ein- oder Zusammenbau der Fertigteile, nicht oder in deutlich geringerem Ausmaß zu Verschiebungen der Dichtung in ihrem Sitz kommt.

Gelöst wird die Aufgabe durch die Gegenstände der unabhängigen Ansprüche. Zweckmäßige Ausgestaltungen der Erfindung sind in den Unteransprüchen angegeben.

In einem ersten Aspekt stellt die vorliegende Erfindung ein Dichtungsprofil zur Einbettung in ein Formteil aus aushärtbarem Material, insbesondere ein Beton- oder Kunststoffformteil, beispielsweise einen Betontübbing oder ein Kunststoffrohr, bereit, wobei das Dichtungsprofil einen Profilbereich mit einer Profilbereichoberfläche aufweist, die nach Einbettung des Dichtungsprofils zum Formteil weist, und wobei das Dichtungsprofil mindestens in einem Teilbereich des Profilbereichs eine fest mit dem Dichtungsprofil verbundene, sich über die Profilbereichoberfläche hinaus erstreckende Vliesstoff-, Filzstoff- oder Wirrfaserschicht aufweist.

Es wurde gefunden, dass die in der Praxis beobachteten Verschiebungen von Tübbingdichtungen weitgehend verhindert werden können, wenn das Dichtungsprofil in dem Formteil zumindest zusätzlich mit einer Vliesstoff-, Filzstoff- oder Wirrfaserschicht verankert wird, die fest mit einem Bereich des Dichtungsprofils verbunden ist. Es wird angenommen, dass die in der Praxis beobachteten Verschiebungen von integrierten Dichtungen darauf zurückzuführen sind, dass die Verankerungsfüße insbesondere bei strangförmigen Dichtungsprofilen in Längsrichtung des Profils kontinuierlich ausgebildet sind und einer Kraftwirkung in dieser Richtung nicht vollständig standhalten können, so dass es zu Verschiebungen und beispielsweise Stauchungen der Dichtung in ihrem Sitz kommen kann. Kerngedanke der vorliegenden Erfindung ist es daher, solche Verschiebungen zu verhindern und generell die Haftung der Dichtung mit dem Formteil zu verbessern, indem eine fest mit einem Profilteil des Dichtungsprofils verbundene Vliesstoff-, Filzstoff- oder Wirrfaserschicht entweder anstelle oder zusätzlich zu mindestens einem Verankerungsfuß in das Formteil eingebettet oder auf andere Weise, beispielsweise über eine Klebschicht, fest mit dem Formteil verbunden wird.

Unter einem "Tübbing" werden vorgefertigte Bauteile der Außenschale von Tunneln, Schächten, Rohren etc. verstanden. Es kann sich beispielsweise um ringsegment- oder ringförmige Bauteile, z.B. aus Beton, handeln.

Unter einem "aushärtbaren Material" wird hier ein zunächst fließfähiges, später jedoch unter Normalbedingungen von selbst oder unter äußerem Einfluss, z.B. von Wärme, UV-Licht etc., aushärtendes Material verstanden. Es kann sich dabei beispielsweise um Beton, Kunstharz, Klebstoff und ähnliches handeln. Es kann sich beispielsweise auch um ein faserhaltiges Kunstharz handeln, das zu einem faserverstärkten Kunststoff, beispielsweise GFK, aushärtet.

Unter einem "Dichtungsprofil" wird hier ein vorzugsweise strangförmiges und/oder ringförmiges Elastomerprofil mit Dichtungsfunktion verstanden, beispielsweise eine Tübbingdichtung, Beton- oder Kunststoffrohrdichtung oder Schachtdichtung. Ein "Elastomerprofil" ist ein Profil aus elastomerem Material. Beispiele für geeignete elastomere Materialien sind Naturkautschuk (NR), Styrol-Butadien-Kautschuk (SBR), Butylkautschuk (IIR), Ethylen-Propylenkautschuk (EPDM), Butadien-Acrylnitrilkautschuk (NBR), hydrierter Acrylnitrilkautschuk (HNBR) Chloroprenkautschuk (CR), chlorsulfoniertes Polyethylen (CSM), Polyacrylatkautschuk (ACM), Polyurethankautschuk (PU), Silikonkautschuk (Q), Fluorsilikonkautschuk (MFQ) und Fluorkautschuk (FPM). Bevorzugt sind EPDM, SBR, CR oder NBR, besonders bevorzugt NBR, wobei das elastomere Material vorzugsweise eine Shorehärte von 60-80° aufweist. Auch Mischungen von Elastomeren, beispielsweise der oben genannten, sind möglich. Ein Dichtungsprofil kann auch bereichsweise aus unterschiedlichen Elastomermaterialien bestehen. Beispielsweise kann der Rückenteil eines Tübbingprofils, d.h. der Profilbereich, mit dem das Profil in eine Schalungsform eingesetzt ist, aus einem anderen, zum Beispiel härteren, Elastomermaterial bestehen als die Basis des Profils, oder umgekehrt. Profile, die Bereiche aus unterschiedlichen elastomeren Materialien aufweisen, können beispielsweise durch Koextrusion hergestellt sein.

Unter dem Begriff "integrierte Dichtung" wird hier ein Dichtungsprofil verstanden, das zur Einbettung in ein Formteil aus aushärtbarem Material vorgesehen und entsprechend ausgestaltet, z.B. mit mindestens einem Verankerungsfuß oder sonstigen Einrichtungen zur Einbettung des Dichtungsprofils in das aushärtbares Material ausgestattet ist.

Unter einem "Verankerungsfuß" wird hier ein Profilfortsatz verstanden, der in das spätere Formteil hineinragt und einen Formschluss zwischen Profil und Formteil bewirkt, so dass das Profil an bzw. in dem ausgehärteten Formteil so befestigt ist, dass es ohne Beschädigung des Formteils und/oder des Profils (z.B. durch Abreißen des Profilfortsatzes) nicht entfernt werden kann. Hierzu können die Profilfortsätze beispielsweise schwalbenschwanzartig oder allgemein mit einem zum Fortsatzende hin zunehmenden Querschnitt ausgestaltet sein. Ein Verankerungsfuß kann alternativ oder zusätzlich auch mit Widerhaken, Hinterschneidungen und dergleichen versehen sein.

Unter dem Begriff "Profilbasis" wird hier der Teil des Dichtungsprofils verstanden, der nach dessen Verankerung dem Formteil zugewendet ist und an dem gegebenenfalls der mindestens eine Verankerungsfuß angeordnet ist. Der Begriff "Profilrücken" bezeichnet den der Profilbasis im Wesentlichen gegenüberliegenden Teil des Dichtungsprofils, der im fertigen Formteil die Dichtfläche bereitstellt, die beispielsweise im Falle von Tübbingen für den Tunnelbau am Profilrücken eines Dichtungsprofils in einem benachbarten Formteil anliegt. Der Begriff "Profilflanke" bezeichnet zwischen Profilbasis und Profilrücken liegende seitliche Bereiche des Dichtungsprofils. Der Begriff "rückenseitiger Flankenteil" bezeichnet jenen Teil einer Profilflanke, der näher in Richtung Profilrücken liegt, während der Begriff "basisseitiger Flankenteil" jenen Teil einer Profilflanke bezeichnet, der näher in Richtung Profilbasis liegt.

Unter dem Begriff "Vliesstoff-, Filzstoff- oder Wirrfaserschicht" wird eine Schicht aus Fasern verstanden, die zu einer Vlies-, Filz- oder Wirrfaserschicht zusammengefügt und auf geeignete Weise miteinander verbunden sind, beispielsweise durch Formschluss (z.B. Verschlingung) und/oder Reibschluss und/oder durch Stoffschluss, beispielsweise mittels Bindemitteln und/oder thermischer Verfahren (z.B. Verschmelzen, Verschweißen). Dadurch, dass die Fasern einer Vliesstoff-, Filzstoff- oder Wirrfaserschicht untereinander verbunden sind, widerstehen sie auch einer Querbelastung bzw. -dehnung.

Die Formulierung, wonach das Dichtungsprofil eine "sich über die Profilbereichoberfläche hinaus erstreckende Vliesstoff-, Filzstoff- oder Wirrfaserschicht aufweist", ist so zu verstehen, dass die Fasern der Vliesstoff-, Filzstoff- oder Wirrfaserschicht über die Profilbereichoberfläche in Richtung des künftigen Formteils hinaussteht bzw. sich von einem Bereich des Dichtungsprofils oder einer darauf aufgebrachten Klebschicht in Richtung des (künftigen) Formteils erstreckt. Die Fasern der Vliesstoff-, Filzstoff- oder Wirrfaserschicht können dabei eine beliebige Orientierung haben.

Wenn hier davon gesprochen wird, dass die Vliesstoff-, Filzstoff- oder Wirrfaserschicht in einem Teilbereich des Profilbereichs vorgesehen sind, schließt das auch ein, dass die Vliesstoff-, Filzstoff- oder Wirrfaserschicht in zwei oder mehr nicht zusammenhängenden Bereichen des Profilbereichs vorgesehen sein kann. Der Teilbereich mit der Vliesstoff-, Filzstoff- oder Wirrfaserschicht kann also auch diskontinuierlich sein.

Die Vliesstoff-, Filzstoff- oder Wirrfaserschicht ist vorzugsweise in mindestens einem Bereich des Dichtungsprofils angeordnet, der nach der Einbettung mit dem Formteil, gegebenenfalls indirekt über eine Klebschicht, in Kontakt gebracht ist.

Wie bereits angegeben, kann das erfindungsgemäße Dichtungsprofil auch alleine über die Vliesstoff-, Filzstoff- oder Wirrfaserschicht in dem Formteil verankert werden. Es ist also nicht unbedingt erforderlich, einen oder mehrere Verankerungsfüße vorzusehen. Bei dieser Ausführungsform ist das Dichtungsprofil nur durch die Vliesstoff-, Filzstoff- oder Wirrfaserschicht mit dem Formteil verbunden. Dies ist beispielsweise bevorzugt für den Fall einer ringförmigen Dichtung für Kunststoffrohre oder Rohrkupplungen, die mittels der Vliesstoff-, Filzstoff- oder Wirrfaserschicht in der Rohrwand oder Kupplungswand verankert werden. In einer Ausführungsform der Erfindung weist das Dichtungsprofil jedoch in dem Profilbereich, der später dem Formteil zugewendet ist, mindestens einen Verankerungsfuß zur Verankerung des Dichtungsprofils in dem Formteil auf. Bei dieser Ausführungsform, die insbesondere bei strangförmig ausgebildeten Dichtungsprofilen bevorzugt sein kann, wie sie beispielsweise häufig für Tunneltübbinge verwendet werden, dient die Vliesstoff-, Filzstoff- oder Wirrfaserschicht neben dem mindestens einen, in der Regel kontinuierlich ausgebildeten Verankerungsfuß für eine zusätzliche Verankerung des Dichtungsprofils in dem Formteil, um insbesondere Verschiebungen des Dichtungsprofils in Profillängsebene zu verhindern bzw. zu verringern.

Für den Fall, dass das erfindungsgemäße Dichtungsprofil in dem Profilbereich, der später dem Formteil zugewendet ist, zwei oder mehr voneinander beabstandete Verankerungsfüße aufweist, beispielsweise jeweils seitlich von der Profillängsachse angeordnete Verankerungsfüße, ist die Vliesstoff-, Filzstoff- oder Wirrfaserschicht bevorzugt in dem Profilbereich zwischen den Verankerungsfüßen angeordnet. Sind mehr als zwei Verankerungsfüße vorhanden, ist es bevorzugt, jeweils zwischen allen benachbarten Verankerungsfüßen eine Vliesstoff-, Filzstoff- oder Wirrfaserschicht vorzusehen. Dies ist jedoch nicht in jedem Fall erforderlich, d.h. eine Vliesstoff-, Filzstoff- oder Wirrfaserschicht kann auch im Falle von beispielsweise drei Verankerungsfüßen lediglich zwischen zwei benachbarten Verankerungsfüßen vorgesehen sein.

Die Vliesstoff-, Filzstoff- oder Wirrfaserschicht kann entweder direkt oder indirekt mit dem Profilbereich fest verbunden sein. Eine direkte Verbindung kann beispielsweise dadurch hergestellt werden, dass die Vliesstoff-, Filzstoff- oder Wirrfaserschicht mit einer zum Dichtungsprofil weisenden Oberfläche in den Profilbereich eingebettet ist. Dies kann beispielsweise bei der Herstellung des Profils geschehen, indem die Vliesstoff-, Filzstoff- oder Wirrfaserschicht teilweise mit einvulkanisiert wird, indem Fasern oder Faserteile im Bereich oder auch unterhalb der Oberfläche der Vliesstoff-, Filzstoff- oder Wirrfaserschicht mit einvulkanisiert werden. Eine indirekte Verbindung kann mittels einer Klebschicht auf dem Profilbereich, in die die Vliesstoff-, Filzstoff- oder Wirrfaserschicht mit einer zum Profil weisenden Oberfläche eingebettet wird, hergestellt werden. Die Fasern der Vliesstoff-, Filzstoff- oder Wirrfaserschicht können beispielsweise aus Metall, Glas, Baumwolle oder Kunststoff, beispielsweise aus Polyamid, Polyester, oder Aramid, bestehen. Die Materialzusammensetzung und Schichtdicke der Vliesstoff-, Filzstoff- oder Wirrfaserschicht kann vom Fachmann abhängig vom jeweiligen Zweck und unter Berücksichtigung der zu erwartenden bzw. aufzufangenden Kräfte ausgewählt bzw. angepasst werden.

Das Dichtungsprofil besteht bevorzugt aus einem elastomeren Material, vorzugsweise aus EPDM, SBR, CR oder NBR, bevorzugt NBR, wobei das elastomere Material vorzugsweise eine Shorehärte von 60-80° aufweist.

In einer insbesondere für Tunneltübbinge geeigneten Ausführungsform der Erfindung umfasst der Profilbereich eine Profilbasis mit einer nach Einbettung des Dichtungsprofils zum Formteil weisenden Profilbasisoberfläche und mindestens eine Profilflanke mit einem basisseitigen Flankenteil mit einer nach Einbettung des Dichtungsprofils zum Formteil weisenden Flankenteiloberfläche, wobei die Profilbasis mindestens in einem Teilbereich eine fest mit ihr verbundene, sich über die Profilbasisoberfläche hinaus erstreckende Vliesstoff-, Filzstoff- oder Wirrfaserschicht aufweist und/oder der basisseitige Flankenteil mindestens in einem Teilbereich eine fest mit dem basisseitigen Flankenteil verbundene, sich über die Flankenteiloberfläche hinaus erstreckende Vliesstoff-, Filzstoff- oder Wirrfaserschicht aufweist. Solche Dichtungsprofile weisen häufig ein, zwei oder mehrere Verankerungsfüße zur Verankerung des Dichtungsprofils in dem Formteil auf. In diesem Fall ist es bevorzugt, zwischen mindestens zwei der Verankerungsfüße eine Vliesstoff-, Filzstoff- oder Wirrfaserschicht anzuordnen.

In einem zweiten Aspekt betrifft die vorliegende Erfindung auch eine Dichtanordnung, umfassend ein Formteil aus aushärtbarem Material, insbesondere ein Beton- oder Kunststoffformteil, und ein darin eingebettetes erfindungsgemäßes Dichtungsprofil nach dem ersten Aspekt der Erfindung, wobei die Vliesstoff-, Filzstoff- oder Wirrfaserschicht einerseits fest mit dem Dichtungsprofil und andererseits fest mit dem Formteil verbunden ist. "Einerseits fest mit dem Dichtungsprofil und andererseits fest mit dem Formteil verbunden" bedeutet, dass die Vliesstoff-, Filzstoff- oder Wirrfaserschicht mit Fasern oder Faserbereichen, die zu der zum Profil weisenden Oberfläche der Vliesstoff-, Filzstoff- oder Wirrfaserschicht hin liegen, fest mit einem Bereich des Dichtungsprofils verbunden ist, sei es mittels einer Klebschicht auf der Profilbereichoberfläche, in die Fasern oder Faserbereiche eingebettet sind, oder mittels direkter Einbettung der Fasern oder Faserbereiche in die Matrix des Profilbereichs, z.B. der Profilbasis, selbst, und mit Fasern oder Faserbereichen, die zur gegenüberliegenden zum Formteil weisenden Oberfläche der Vliesstoff-, Filzstoff- oder Wirrfaserschicht hin liegen, in dem Formteil eingebettet, d.h. von dem ausgehärteten Material des Formteils umgeben, sind.

Bei der erfindungsgemäßen Dichtanordnung ist ein erfindungsgemäßes Dichtungsprofil über eine Vielzahl von durch die jeweils eingebettenen Fasern oder Faserbereiche der Vliesstoff-, Filzstoff- oder Wirrfaserschicht gebildeten punktuellen Verbindungen in dem Formteil verankert. Der Vorteil einer Verbindung zwischen Formteil und Dichtungsprofil über eine Vliesstoff-, Filzstoff- oder Wirrfaserschicht gegenüber beispielsweise einer Flockfaserschicht besteht u.a. darin, dass bei einer Vliesstoff-, Filzstoff- oder Wirrfaserschicht nicht jede einzelne Faser direkt mit dem einen Ende mit dem Dichtungsprofil und mit dem anderen Ende mit dem Formteil verbunden ist, sondern einseits Fasern mit dem Dichtungsprofil verbunden sind und andererseits Fasern mit dem Formteil verbunden sind, wobei die mit dem Dichtungsprofil verbundenen Fasern und die mit dem Formteil verbundenen Fasern untereinander über Fasern verbunden sind. Dadurch ist eine erfindungsgemäß mittels Vliesstoff-, Filzstoff- oder Wirrfaserschicht verankerte Dichtung auch gegenüber Querbelastungen bzw. -dehnungen widerstandsfähiger. Das Dichtungsprofil kann nur über die Vliesstoff-, Filzstoff- oder Wirrfaserschicht oder zusätzlich mit einem oder mehreren Verankerungsfüßen in dem Formteil verankert sein.

Die Schichtdicke der Vliesstoff-, Filzstoff- oder Wirrfaserschicht kann in Abhängigkeit von dern Erfordernissen vom Fachmann gewählt werden. Es ist dabei bevorzugt, dass die Vliesstoff-, Filzstoff- oder Wirrfaserschicht bei der erfindungsgemäßen Dichtanordnung vollständig einerseits in das Material des Dichtungsprofils bzw. der Klebschicht und andererseits des Formteils eingebettet ist.

Das Formteil kann beispielsweise ein Betontübbing für den Tunnelbau, ein Betonring für einen Schacht oder ein Betonrohr(abschnitt), z.B. für den Kanal- oder Rohrleitungsbau, oder ein Kunststoffrohr, beispielsweise ein GFK-Rohr, sein.

Die Erfindung wird im Folgenden anhand der angehängten Figuren rein zu Veranschaulichungszwecken näher erläutert.

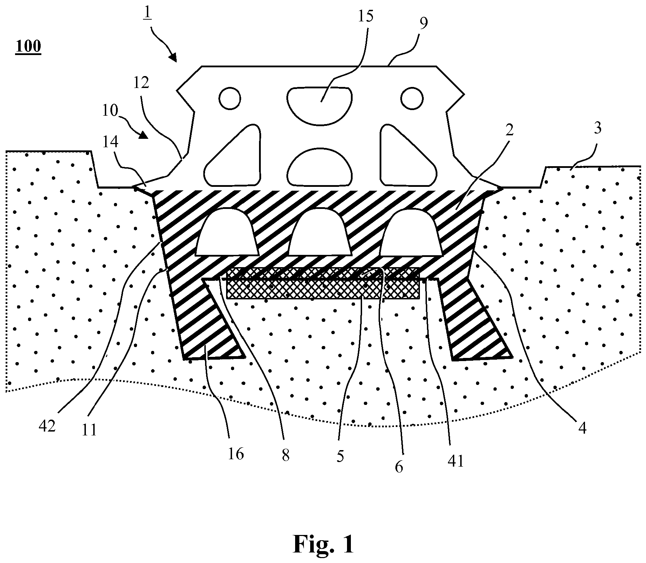

Fig. 1 Schematische Darstellung einer Ausführungsform eines erfindungsgemäßen Dichtungsprofils, eingebettet in ein Formteil.

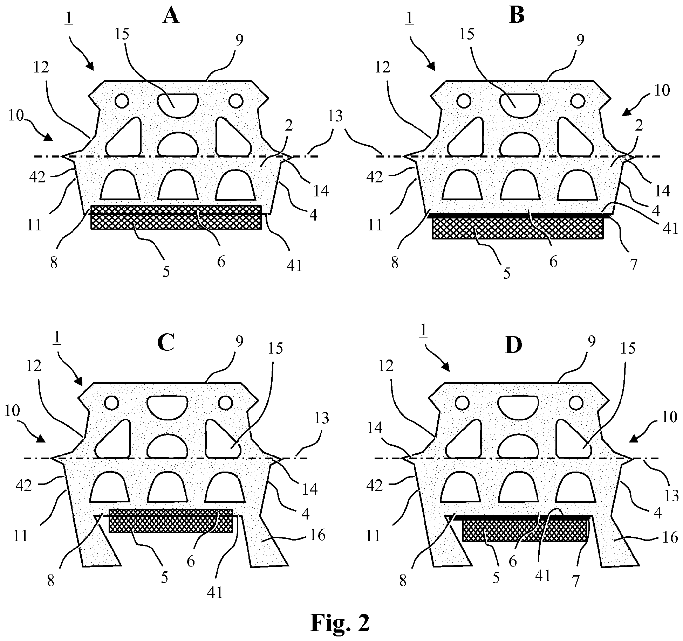

Fig. 2 Schematische Darstellung von Ausführungsformen eines erfindungsgemäßen Dichtungsprofils im Querschnitt. A. Ausführungsform ohne Verankerungsfuß mit einvulkanisierter Vliesstoff-, Filzstoff- oder Wirrfaserschicht. B. Ausführungsform ohne Verankerungsfuß, mit einer Vliesstoff-, Filzstoff- oder Wirrfaserschicht, die über eine Klebschicht mit der Profilbasis verbunden ist. C. Ausführungsform mit Verankerungsfuß mit einvulkanisierter Vliesstoff-, Filzstoff- oder Wirrfaserschicht. D. Ausführungsform mit Verankerungsfuß, mit Vliesstoff-, Filzstoff- oder Wirrfaserschicht, die über eine Klebschicht mit der Profilbasis verbunden ist.

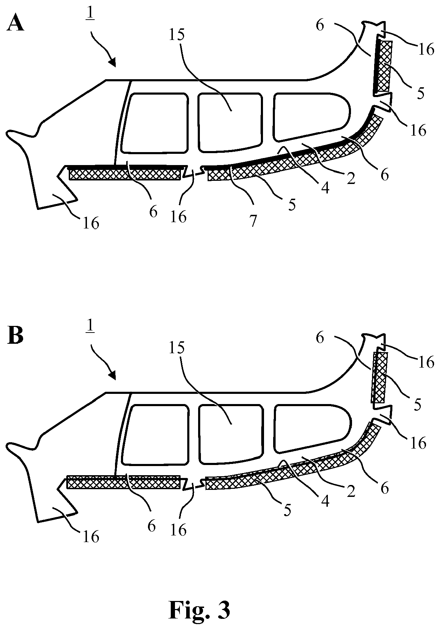

Figur 3 zeigt schematisch eine Ausführungsform eines erfindungsgemäßen Dichtungsprofils für Betonrohre oder -schächte. A. Ausführungsform mit Verankerungsfüßen, mit Vliesstoff-, Filzstoff- oder Wirrfaserschicht, die über eine Klebschicht mit dem Profil verbunden ist. B. Ausführungsform mit Verankerungsfüßen, mit Vliesstoff-, Filzstoff- oder Wirrfaserschicht, die direkt in das Profil eingebettet ist.

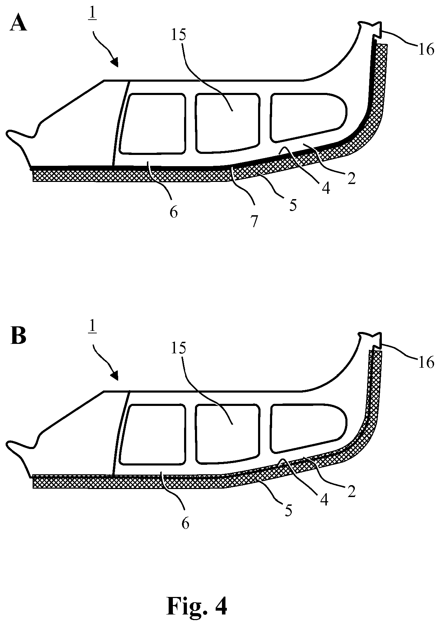

Figur 4 zeigt schematisch eine weitere Ausführungsform eines erfindungsgemäßen Dichtungsprofils für Betonrohre oder -schächte. A. Ausführungsform mit Vliesstoff-, Filzstoff- oder Wirrfaserschicht, die über eine Klebschicht mit dem Profil verbunden ist. B. Ausführungsform mit Vliesstoff-, Filzstoff- oder Wirrfaserschicht, die direkt in das Profil eingebettet ist.

Figur 1 zeigt schematisch eine Dichtanordnung 100, umfassend ein Dichtungsprofil 1, wie es auch in Figur 2C dargestellt ist, und ein Formteil 3, hier einen Betontübbing für den Tunnelbau, von dem nur ein Ausschnitt dargestellt ist.

Das hier im Querschnitt allgemein hexagonale Dichtungsprofil 1 aus elastomerem Material weist einen (hier schraffiert dargestellten) Profilbereich 2 mit einer zum Formteil 3 weisenden Profilbereichoberfläche 4 auf. Der Profilbereich 2 umfasst eine Profilbasis 8 mit einer Profilbasisoberfläche 41 und basisseitige Profilflankenteile 11 der seitlichen Profilflanken 10 mit einer Profilflankenoberfläche 42. Das Dichtungsprofil 1 weist einen der Profilbasis 8 gegenüberliegenden Profilrücken 9 und rückenseitige Flankenteile 12 auf. Eine Vliesstoff-, Filzstoff- oder Wirrfaserschicht 5, die hier als streifenförmige Matte ausgebildet ist, ist hier mit Fasern bzw. Faserbereichen, die im Bereich ihrer zum Dichtungsprofil 1 weisenden Oberfläche liegen, direkt in dem Dichtungsprofil 1, d.h. in einem Teilbereich 6 des Profilbereichs 2, hier der Profilbasis 8, eingebettet. Bei der hier mit zwei schwalbenschwanzförmigen, voneinander beabstandeten Verankerungsfüßen 16 ausgestatteten Ausführungsform liegt der Teilbereich 6 mit der Vliesstoff-, Filzstoff- oder Wirrfaserschicht 5 in dem Bereich der Profilbasis 8 zwischen den Verankerungsfüßen 16. Das streifenförmige Dichtungsprofil 1 weist in Längsrichtung des Dichtungsprofils 1 verlaufende Längskanäle 15 auf, wie dies auch bei Profilen aus dem Stand der Technik bekannt ist.

Bei dem hier dargestellten Dichtungsprofil 1 sind flankenseitige Dichtlippen 14 vorhanden, die jeweils in Höhe der Ebene 13 (s. Fig. 2) angeordnet sind, oberhalb derer in der Darstellung die rückenseitigen Flankenteile 12 und unterhalb derer hier die basisseitigen Flankenteile 11 liegen. Das Dichtungsprofil 1 ist hier basisseitig bis zu den Dichtlippen 14 von dem aushärtbaren Material, beispielsweise Beton, umgeben. Bei der hier dargestellten Ausführungsform erfolgt die Verankerung des Dichtungsprofils 1 sowohl über die Verankerungsfüße 16 als auch über die Vliesstoff-, Filzstoff- oder Wirrfaserschicht 5. Die Vliesstoff-, Filzstoff- oder Wirrfaserschicht 5 verhindert bzw. erschwert hier durch ihre Verbindung mit dem Formteil 3 eine Verschiebung des Dichtungsprofils 1 in dessen Längsrichtung, d.h. in Richtung senkrecht zur Papierebene.

Figur 2 zeigt schematisch verschiedene Ausführungsformen eines erfindungsgemäßen Dichtungsprofils 1 im Querschnitt. Fig. 2A zeigt eine Ausführungsform eines erfindungsgemäßen Dichtungsprofils 1 ohne Verankerungsfuß 16 mit direkt in die Profilbasis 8 einvulkanisierter Vliesstoff-, Filzstoff- oder Wirrfaserschicht 5. Fig. 2B zeigt eine Ausführungsform eines erfindungsgemäßen Dichtungsprofils 1 ohne Verankerungsfuß 16, mit einer Vliesstoff-, Filzstoff- oder Wirrfaserschicht 5, die über eine Klebschicht 7 mit der Profilbasis 8 verbunden ist. Fig. 2C zeigt die in Figur 1 eingebettet in ein Formteil 3 dargestellte Ausführungsform eines erfindungsgemäßen Dichtungsprofils 1 mit zwei Verankerungsfüßen 16 mit einvulkanisierter Vliesstoff-, Filzstoff- oder Wirrfaserschicht 5. Fig. 2D zeigt eine

Ausführungsform eines erfindungsgemäßen Dichtungsprofils 1 mit Verankerungsfüßen 16, und mit einer Vliesstoff-, Filzstoff- oder Wirrfaserschicht 5, die über eine Klebschicht 7 mit der Profilbasis 8 verbunden ist. Dargestellt sind jeweils Querschnitte durch ein strangförmiges Dichtungsprofil 1, d.h. Schnitte quer zur Längsachse des strangförmigen Dichtungsprofils 1, das man sich oberhalb und unterhalb der Papierebene fortgesetzt denken muss.

Die in den Figuren 2A und 2B dargestellten Ausführungsformen weisen keine Verankerungsfüße 16 auf. Die in den Figuren 2C und 2D dargestellten Ausführungsformen weisen zwei von der Profilbasis 8 aus sich erstreckende, hier schwalbenschwanzförmige, voneinander beabstandete Verankerungsfüße 16 auf. Eine Vliesstoff-, Filzstoff- oder Wirrfaserschicht 5 ist mit Fasern bzw. Faserbereichen, die im Bereich der zum Dichtungsprofil 1 weisenden Oberfläche liegen, entweder direkt in die Profilbasis 8 (Fig. 2A, C) oder in eine Klebschicht 7 (Fig. 2B, D) auf der Profilbasisoberfläche 41 eingebettet. Bei Ausführungsformen mit Verankerungsfüßen 16 (Fig. 2C, D) ist die Vliesstoff-, Filzstoff- oder Wirrfaserschicht 5 in dem Bereich der Profilbasis 8 zwischen den Verankerungsfüßen 16 angeordnet. Die Dichtungsprofile 1 weisen in Längsrichtung des Dichtungsprofils 1 verlaufende Längskanäle 15 auf, wie dies auch bei Profilen aus dem Stand der Technik bekannt ist.

Figur 3 zeigt einen Querschnitt durch eine Ausführungsform eines erfindungsgemäßen Dichtungsprofils 1, das besonders für Betonrohre oder Schächte geeignet ist. Das Dichtungsprofil 1 verfügt hier über Verankerungsfüße 16 und eine Vliesstoff-, Filzstoff- oder Wirrfaserschicht 5, mit deren Hilfe das Dichtungsprofil 1 in eine Betonrohrmuffe (nicht dargestellt) eingebettet werden kann. Die Vliesstoff-, Filzstoff- oder Wirrfaserschicht 5 ist entweder mittels einer Klebschicht 7 auf der Profilbereichoberfläche 4 mit dem Profilbereich 2 verbunden, der dem späteren Formteil 3, d.h. der Betonrohrmuffe, zugewendet ist (siehe Figur 3A), oder direkt in den Profilbereich 2 eingebettet (siehe Figur 3B). Die Vliesstoff-, Filzstoff- oder Wirrfaserschicht 5 ist in Teilbereichen 6 des Profilbereichs 2 zwischen den Verankerungsfüßen 16 angeordnet. Auch hier sind in dem Dichtungsprofil 1 Längskanäle 15 vorhanden.

Figur 4 zeigt einen Querschnitt durch eine weitere Ausführungsform eines erfindungsgemäßen Dichtungsprofils 1, das besonders für Betonrohre oder Schächte geeignet ist. Zur Verankerung des Dichtungsprofils 1 dient hier im Wesentlichen die über einen ausgedehnten Teilbereich 6 vorgesehene Vliesstoff-, Filzstoff- oder Wirrfaserschicht 5. Der einzige im Randbereich des Dichtungsprofils 1 noch vorhandene Verankerungsfuß 16 dient im Wesentlichen als Einlaufschutz gegen flüssigen Beton beim Gießen des Formteils 3. Auch bei dieser Ausführungsform ist die Vliesstoff-, Filzstoff- oder Wirrfaserschicht 5 entweder mittels einer Klebschicht 7 auf der Profilbereichoberfläche 4 mit dem Profilbereich 2 verbunden, der dem späteren Formteil 3, d.h. der Betonrohrmuffe, zugewendet ist (siehe Figur 4A), oder direkt in den Profilbereich 2 eingebettet (siehe Figur 4B).

## Patentansprüche

1. Dichtungsprofil zur Einbettung in ein Formteil aus aushärtbarem Material, insbesondere ein Beton- oder Kunststoffformteil, wobei das Dichtungsprofil (1) einen Profilbereich (2) mit einer Profilbereichoberfläche (4) aufweist, die nach Einbettung des Dichtungsprofils (1) zum Formteil (3) weist, **dadurch gekennzeichnet, dass** das Dichtungsprofil (1) mindestens in einem Teilbereich (6) des Profilbereichs (2) eine fest mit dem Dichtungsprofil (1) verbundene, sich über die Profilbereichoberfläche (4) hinaus erstreckende Vliesstoff-, Filzstoff- oder Wirrfaserschicht (5) aufweist.

2. Dichtungsprofil nach Anspruch 1, wobei die Vliesstoff-, Filzstoff- oder Wirrfaserschicht (5) indirekt mittels einer Klebschicht (7) auf der Profilbereichoberfläche (4) des Profilbereichs (2) oder direkt durch Einbettung in den Profilbereich (2) mit dem Dichtungsprofil (1) fest verbunden ist.

3. Dichtungsprofil nach Anspruch 1 oder 2, wobei das Dichtungsprofil (1) in dem Profilbereich (2) mindestens einen Verankerungsfuß (16) zur Verankerung des Dichtungsprofils (1) in dem Formteil (3) aufweist.

4. Dichtungsprofil nach einem der vorhergehenden Ansprüche, wobei das Dichtungsprofil (1) in dem Profilbereich (2) zwei oder mehr voneinander beabstandete Verankerungsfüße (16) und ein oder mehrere Teilbereiche (6) mit einer Vliesstoff-, Filzstoff- oder Wirrfaserschicht (5) zwischen jeweils zwei benachbarten Verankerungsfüßen (16) aufweist.

5. Dichtungsprofil nach einem der vorhergehenden Ansprüche, wobei das Dichtungsprofil (1) aus einem elastomeren Material, vorzugsweise aus Ethylen-Propylenkautschuk, Styrol-Butadien-Kautschuk, Chloroprenkautschuk oder Butadien-Acrylnitrilkautschuk, bevorzugt Butadien-Acrylnitrilkautschuk, besteht, und wobei das elastomere Material vorzugsweise eine Shorehärte von 60-80° aufweist.

6. Dichtungsprofil nach einem der vorhergehenden Ansprüche, wobei die Fasern der Vliesstoff-, Filzstoff- oder Wirrfaserschicht (5) Metall-, Glas-, Baumwoll- oder Kunststofffasern sind, vorzugsweise Polyamid-, Polyester-, oder Aramidfasern.

7. Dichtungsprofil nach einem der vorhergehenden Ansprüche, insbesondere für Tunneltübbinge, wobei der Profilbereich (2) eine Profilbasis (8) mit einer nach Einbettung des Dichtungsprofils (1) zum Formteil (3) weisenden Profilbasisoberfläche (41) und mindestens eine Profilflanke (10) mit einem basisseitigen Flankenteil (11) mit einer nach Einbettung des Dichtungsprofils (1) zum Formteil (3) weisenden Flankenteiloberfläche (42) umfasst, und wobei die Profilbasis (8) mindestens in einem Teilbereich (6) eine fest mit ihr verbundene, sich über die Profilbasisoberfläche (41) hinaus erstreckende Vliesstoff-, Filzstoff- oder Wirrfaserschicht (5) aufweist und/oder der basisseitige Flankenteil (11) mindestens in einem Teilbereich (6) eine fest mit dem basisseitigen Flankenteil (11) verbundene, sich über die Flankenteiloberfläche (42) hinaus erstreckende Vliesstoff-, Filzstoff- oder Wirrfaserschicht (5) aufweist.

8. Dichtanordnung, umfassend ein Formteil (3) aus aushärtbarem Material und ein darin eingebettetes Dichtungsprofil (1) nach einem der vorhergehenden Ansprüche, wobei die Vliesstoff-, Filzstoff- oder Wirrfaserschicht (5) einerseits fest mit dem Dichtungsprofil (1) und andererseits fest mit dem Formteil (3) verbunden ist.

9. Dichtanordnung nach Anspruch 8, wobei das Formteil (3) ein Beton- oder Kunststoffformteil, bevorzugt ein Betontübbing für den Tunnelbau, ein Betonring für Schachtbauten, ein Betonrohr für den Kanal- oder Rohrleitungsbau oder ein Kunststoffrohr, bevorzugt ein Rohr aus faserverstärktem Kunststoff, ist.

## Claims

1. A sealing profile to be embedded into a molded part made of curable material, in particular a concrete or plastic molded part, wherein the sealing profile (1) has a profile area (2) with a profile area surface (4), which faces toward the molded part (3) after the sealing profile (1) has been embedded, **characterized in that**, at least in a partial area (6) of the profile area (2), the sealing profile (1) has a nonwoven, felted or random fiber layer (5) that is firmly connected with the sealing profile (1) and extends beyond the profile area surface (4).

2. The sealing profile according to claim 1, wherein the nonwoven, felted or random fiber layer (5) is firmly connected with the sealing profile (1) indirectly by means of an adhesive layer (7) on the profile area surface (4) of the profile area (2) or directly via embedding in the profile area (2).

3. The sealing profile according to claim 1 or 2, wherein the sealing profile (1) in the profile area (2) has at least one anchoring foot (16) for anchoring the sealing profile (1) in the molded part (3).

4. The sealing profile according to one of the preceding claims, wherein the sealing profile (1) in the profile area (2) has two or more spaced apart anchoring feet (16) and one or several partial areas (6) with a nonwoven, felted or random fiber layer (5) between a respective two adjacent anchoring feet (16).

5. The sealing profile according to one of the preceding claims, wherein the sealing profile (1) consists of an elastomeric material, preferably of ethylene-propylene rubber, styrenebutadiene rubber, chloroprene rubber or butadiene-acrylonitrile rubber, preferentially butadiene-acrylonitrile rubber, and wherein the elastomeric material preferably has a Shore hardness of 60-80°.

6. The sealing profile according to one of the preceding claims, wherein the fibers of the nonwoven, felted or random fiber layer (5) are metal, glass, cotton or plastic fibers, preferably polyamide, polyester or aramid fibers.

7. The sealing profile according to one of the preceding claims, in particular for tunnel segments, wherein the profile area (2) comprises a profile base (8) with a profile base surface (41) that faces toward the molded part (3) after the sealing profile (1) has been embedded, and at least one profile flank (10) with a base-side flank part (11) with a flank part surface (42) that faces toward the molded part (3) after the sealing profile (1) has been embedded, and wherein the profile base (8) has a has a nonwoven, felted or random fiber layer (5) that is firmly connected with it and extends beyond the profile base surface (41) at least in a partial area (6), and/or the base-side flank part (11) has a nonwoven, felted or random fiber layer (5) that is firmly connected with the base-side flank part (11) and extends beyond the flank part surface (42) at least in a partial area (6).

8. A sealing arrangement, comprising a molded part (3) made out of curable material and a sealing profile (1) embedded therein according to one of the preceding claims, wherein the nonwoven, felted tor random fiber layer (5) is firmly connected with the sealing profile (1) on the one hand, and firmly connected with the molded part (3) on the other.

9. The sealing arrangement according to claim 8, wherein the molded part (3) is a concrete or plastic molded part, preferably a concrete segment for tunnel construction, a concrete ring for shaft construction, a concrete pipe for channel or pipeline construction or a plastic pipe, preferably a pipe made out of fiber-reinforced plastic.

## Revendications

1. Profilé d'étanchéité destiné à être incorporé dans une pièce moulée en matériau thermodurcissable, en particulier une pièce moulée en béton ou en matière plastique, sachant que le profilé d'étanchéité (1) comporte une zone profilée (2) avec une surface de zone profilée (4), qui est tournée vers la pièce moulée (3) après incorporation du profilé d'étanchéité (1), **caractérisé en ce que** le profilé d'étanchéité (1) comporte au moins dans une partie de zone (6) de la zone profilée (2) une couche à base de matériau non tissé, à base de feutre ou de fibres désorientées (5), fermement reliée au profilé d'étanchéité (1), s'étendant au-delà de la surface de zone profilée (4).

2. Profilé d'étanchéité selon la revendication 1, sachant que la couche à base de matériau non tissé, à base de feutre ou de fibres désorientées (5) est fermement reliée au profilé d'étanchéité (1) indirectement au moyen d'une couche adhésive (7) sur la surface de zone profilée (4) de la zone profilée (2) ou directement par incorporation dans la zone profilée (2).

3. Profilé d'étanchéité selon la revendication 1 ou 2, sachant que le profilé d'étanchéité (1) comporte dans la zone profilée (2) au moins un pied d'ancrage (16) pour ancrer le profilé d'étanchéité (1) dans la pièce moulée (3).

4. Profilé d'étanchéité selon l'une quelconque des revendications précédentes, sachant que le profilé d'étanchéité (1) comporte dans la zone profilée (2) deux ou plusieurs pieds d'ancrage (16) espacés les uns des autres et une ou plusieurs zones profilées (6) avec une couche à base de matériau non tissé, à base de feutre ou de fibres désorientées (5) entre respectivement deux pieds d'ancrage (16) voisins.

5. Profilé d'étanchéité selon l'une quelconque des revendications précédentes, sachant que le profilé d'étanchéité (1) est composé d'un matériau élastomère, de préférence de caoutchouc éthylène-propylène, de caoutchouc styrène-butadiène, de caoutchouc chloroprène ou de caoutchouc butadiène-acrylonitrile, de préférence de caoutchouc butadiène-acrylonitrile et sachant que le matériau élastomère comporte de préférence une dureté Shore de 60-80°.

6. Profilé d'étanchéité selon l'une quelconque des revendications précédentes, sachant que les fibres de la couche à base de matériau non tissé, à base de feutre ou de matériau à base de fibres désorientées (5) sont des fibres métalliques, de verre, de coton ou de matière plastique, de préférence des fibres de polyamide, de polyester ou d'aramide.

7. Profilé d'étanchéité selon l'une quelconque des revendications précédentes, en particulier pour cuvelages de tunnel, sachant que la zone de profilé (2) comprend une base profilée (8) avec une surface de base profilée (41) tournée vers la pièce moulée (3) après incorporation du profilé d'étanchéité (1) et au moins un flanc profilé (10) avec une partie de flanc (11) côté base avec une surface de partie de flanc (42) tournée vers la pièce moulée (3) après incorporation du profilé d'étanchéité (1) et sachant que la base profilée (8) comporte au moins dans une partie de zone (6) une couche à base de matériau non tissé, à base de feutre ou de fibres désorientées (5) fermement reliée à elle, s'étendant au-delà de la surface de base profilée (41) et/ou la partie de flanc côté base (11) comporte au moins dans une partie de zone (6) une couche à base de matériau non tissé, à base de feutre ou de fibres désorientées (5) fermement reliée à la partie de flanc côté base (11), s'étendant au-delà de la surface de partie de flanc (42).

8. Montage d'étanchéité, comprenant une pièce moulée (3) dans un matériau thermodurcissable et un profilé d'étanchéité (1) encastré dedans selon l'une quelconque des revendications précédentes, sachant que la couche à base de matériau non tissé, à base de feutre ou de fibres désorientées (5) est reliée fermement d'une part au profilé d'étanchéité (1) et fermement d'autre part à la pièce moulée (3).

9. Montage d'étanchéité selon la revendication 8, sachant que la pièce moulée (3) est une pièce moulée en béton ou une pièce moulée en matière plastique, de préférence un cuvelage en béton pour la construction de tunnels, un anneau en béton pour les constructions de puits, un conduit en béton pour la construction de canaux ou conduits ou un conduit en matière plastique, de préférence un conduit en matière plastique renforcée aux fibres.
